# EUROPÄISCHE PATENTSCHRIFT

(11) **EP 1 320 495 B1**
(45) Veröffentlichungstag und Bekanntmachung des Hinweises auf die Patenterteilung: **02.03.2005**
(21) Anmeldenummer: 00969230.2
(22) Anmeldetag: 27.09.2000
(51) Int. Cl.: B65D 81/05, B29C 49/00

(54) **GASGEFÜLLTE FÜLLKÖRPER**
GAS FILLED BODIES
CORPS DE REMPLISSAGE REMPLIS DE GAZ

(43) Veröffentlichungstag der Anmeldung: 25.06.2003
(60) Teilanmeldung: 04105135.0
(73) Patentinhaber: Lörsch, Johannes, 47638 Straelen (DE)
(72) Erfinder: Lörsch, Johannes, 47638 Straelen (DE)
(74) Vertreter: Bonsmann, Manfred, Dipl.-Ing.
(86) Internationale Anmeldenummer: PCT/DE2000/003371
(87) Internationale Veröffentlichungsnummer: WO 2002/026589

(56) Entgegenhaltungen:
- EP-A- 0 252 467
- EP-A- 1 022 234
- DE-A- 19 913 408
- US-A- 3 975 885

## Beschreibung

Die Erfindung bezieht sich auf ein Verfahren zur Herstellung gasgefüllter Füllkörper unter Verwendung von Kunststoffschläuchen mit zwei übereinanderliegenden Folien, die an einem ersten ihrer Längsränder gasdicht miteinander verbunden sind, wobei die Oberfolie und die Unterfolie zur Ausbildung aufblasbarer Taschen in Querrichtung durch mit Abstand zueinander angeordnete Paare gasdichter Schweißnähte miteinander verschweißt sind, die sich von dem ersten Längsrand aus bis zu einer vorgegebenen Entfernung von dem gegenüberliegenden, zweiten Längsrand erstrecken, und wobei zwischen den Schweißnähten jedes Schweißnahtpaares ein Zwischenraum vorhanden ist. Ferner bezieht sich die Erfindung auf eine Vorrichtung zur Durchführung des Verfahrens.

Gasgefüllte Füllkörper dienen zur Polsterung von Gegenständen in Transportkisten, um Erschütterungen oder Beschädigungen der transportierten Gegenstände zu vermeiden. Die Füllkörper werden erst unmittelbar vor ihrem Gebrauch mit Gas gefüllt und können daher sehr platzsparend zum Verpacker bzw. Verbraucher geliefert und bei diesem gelagert werden. Ein weiterer Vorteil der Füllkörper liegt darin, dass sie aufgrund ihres geringen Gewichtes das Verpackungsgewicht kaum erhöhen und nach ihrem Einsatz sortenrein recycelt werden können, da sie üblicherweise aus einem einzigen Kunststoffmaterial hergestellt sind.

Bekannt ist es, die Füllkörper aus einer Kunststofffolie herzustellen, die als Schlauch geblasen, dann als Flachschlauch auf eine Rolle aufgewickelt und in dieser Form dem Abnehmer zugeführt wird. Beim jeweiligen Abnehmer wird dieser Flachschlauch von der Rolle als flaches Material einer Maschine zugeführt, die in bestimmten Abständen den Schlauch in Querrichtung perforiert. Mit Greifern, beispielsweise mit Vakuumgreifern, werden dann die beiden Flachseiten des Schlauches auseinandergezogen, so dass durch die Perforation hindurch Luft in den Schlauch eindringen kann. In diesem luftgefüllten Zustand werden die Ober- und die Unterfolie beidseits der Perforation mittels einer Schweißnaht luftdicht miteinander verbunden, wodurch die luftgefüllten Füllkörper bzw. Beutel ausgebildet werden. An der Perforation werden die Füllkörper vom Schlauch abgerissen, um sie ihrer jeweiligen Verwendung zuzuführen. Nachteilig hierbei ist, dass die beim Abnehmer erforderliche Maschine technisch relativ aufwendig und kostenintensiv ist. Insbesondere liegen die Perforations- und Schweißwerkzeuge nah beieinander, was deren Austausch erschwert. So ist eine Verwendung unterschiedlich breiter Kunststofffolien sowie eine Ausbildung in Schlauchlängsrichtung unterschiedlich langer Füllkörper mit erheblichem Aufwand verbunden, da die Schweißnahtlänge und/oder deren Abstand zueinander jeweils angepasst werden muss.

Aus der EP 1 022 234 A1 ist ein Kunststoffschlauch der eingangs erwähnten Art bekannt (vgl. Fig. 2A). Angaben zu einem Verfahren zur Befüllung eines derartigen Kunststoffschlauches bzw. zu einer entsprechenden Vorrichtung sind jedoch in diesem Dokument nicht offenbart.

Aus der DE 34 42 396 A1 ist ein allseits geschlossener Kunststoffschlauch bekannt, der mittels einer Art Injektionseinrichtung befüllt wird, wobei die durch die Injektionseinrichtung eingebrachte Öffnung anschließend verschweißt wird. Das bekannte Konzept erfordert recht aufwendige und teure Befüllungsvorrichtungen, da bei diesen Vorrichtungen die kleinen Injektionsöffnungen durch Niederhalten der Folie gegenüber der Umgebung abgedichtet werden und zum Erreichen einer zufriedenstellenden Füllrate mit relativ hohen Drücken beaufschlagt werden müssen, wodurch in der Regel ein Kompressor zur Drucklufterzeugung erforderlich wird.

Ausgehend hiervon liegt der Erfindung die Aufgabe zugrunde, ein Füllverfahren bzw. eine Füllvorrichtung für derartige gasgefüllte Füllkörper zu schaffen, welches bzw. welche einfach und flexibel ist.

Die Aufgabe wird erfindungsgemäß durch ein Verfahren mit den Merkmalen des Patentanspruches 1 sowie durch eine Vorrichtung mit den Merkmalen des Patentanspruches 2 gelöst. Vorteilhafte Ausgestaltungen der Erfindung sind in den Unteransprüchen beschrieben.

Durch die Verwendung des vorstehend beschriebenen Kunststoffschlauches werden die beim Abnehmer durchzuführenden Arbeiten deutlich reduziert, wobei ein vorkonfektionierter Kunststoffschlauch nicht nennenswert kostenaufwendiger ist als vorbekannte Schläuche, da Kunststoffschläuche im Rahmen der Vorkonfektionierung in mehreren parallelen Bahnen hergestellt werden können, beispielsweise in doppelter Breite. In die Füllkörper muss nur noch Gas seitlich eingeblasen werden und die seitliche Gas-Einfüllöffnung durch eine Schweißnaht in Längsrichtung des Schlauches geschlossen werden. Hierdurch kann die Vorrichtung bzw. Maschine zur Herstellung gasgefüllter Füllkörper zum einen einfacher ausgebildet sein und zum anderen an die Herstellung unterschiedlich großer Füllkörper leicht angepasst werden. Ein Trennen von Oberfolie und Unterfolie mittels eines Werkzeugs ist nicht zwingend erforderlich. Dieses Trennen wird bereits durch das Einblasen des Gases bewirkt. Da die Gasbefüllung von einem Längsrand aus erfolgt und auch nur eine einzige Schweißeinrichtung vorgesehen sein muss, die auch an diesem Längsrand angeordnet ist und lediglich zur Verschweißung der Gas-Einfüllöffnung ausgelegt sein muss, können problemlos unterschiedlich breite Kunststoffschläuche verarbeitet werden. Über die Breite der Kunststofffolie hinweg müssen keine Arbeiten durchgeführt werden, so dass auch entsprechende Vorrichtungsteile, wie beispielsweise Perforiermesser oder entsprechende Schweißwerkzeuge, nicht vorhanden sind und daher auch nicht angepasst oder ausgetauscht werden müssen. Auch die Abmessungen der Füllkörper in Schlauchlängsrichtung können ohne weiteres variiert werden, da entweder immer nur eine gleich breite Gas-Einfüllöffnung geschlossen werden muss oder das entsprechende Schweißwerkzeug sehr einfach ausgetauscht werden kann. Das Schweißwerkzeug ist problemlos zugänglich, da keine weiteren Werkzeuge in unmittelbarer Nähe vorhanden sind. Eine erfindungsgemäße Vorrichtung ist daher kostengünstiger und auch wartungsfreundlicher als bekannte Vorrichtungen. Es muss lediglich eine Schweißnaht erzeugt werden, und dies immer an der gleichen Stelle, so dass auch Qualitätsschwankungen der Schweißnaht reduziert werden und eine gleichbleibend hohe Schweißqualität gewährleistet wird.

Jede Tasche kann auf der Seite des zweiten Längsrandes völlig offen oder zum Teil durch eine Schweißnaht in Längsrichtung gasdicht verschlossen sein. Der freibleibende Teil bildet jeweils die Gas-Einfüllöffnung aus. Denkbar ist beispielsweise, dass diese Schweißnaht auf der Seite des zweiten Längsrandes sich von einem Schweißnahtpaar aus beidseits bis zu einem vorgegebenen Abstand zu den nächsten Schweißnahtpaaren erstreckt, wobei durch diesen Abstand jeweils die Gas-Einfüllöffnung ausgebildet wird.

In vorteilhafter Ausgestaltung ist in dem Zwischenraum jedes Schweißnahtpaares eine Perforation angeordnet, die ein einfaches Abtrennen der gefüllten Beutel erlaubt. Alternativ kann die Trennung der Beutel auch durch ein Schneidemesser oder eine an einer Vorrichtung zur Befüllung der Kunststoffschläuche vorgesehene Schneidekante erfolgen.

Vorteilhafterweise sind in dem Raum zwischen dem zweiten Längsrand und den benachbarten Enden der quer verlaufenden . Schweißnähte Markierungen zur Anzeige der Lage dieser Schweißnähte angeordnet. Mit diesen Maßnahmen wird eine ansonsten erforderliche, aufwendige Synchronisation der Vorrichtung vermieden. Die Markierungen sind bevorzugt als Ausstanzungen ausgebildet, könnten aber auch in gleichfalls bevorzugter Weise aufgedruckt sein.

Weiterhin können Markierungen mit codierten Informationen über die Beschaffenheit der Kunststoffschläuche ausgestanzt oder aufgedruckt sein. Dadurch kann eine Vorrichtung zum Befüllen der erfindungsgemäßen Kunststoffschläuche die Art der gerade in die Vorrichtung eingelegten Folie (z.B. Folienstärke, Material, Abmessungen) erfassen und so verschiedene Betriebsparameter automatisch anpassen, wie z.B. Schweißzeit- und Temperatur, Füllmenge bzw. Füllzeit, Transportgeschwindigkeit und Transportstrecken usw.

Weiterhin können im Bereich der Perforation zumindest in der Nähe der Längsränder Ausstanzungen zum Eingreifen eines Dorns für den Weitertransport des Schlauchs vorgesehen sein. Der Kunststoffschlauch kann so auf einfache Weise durch die Vorrichtung hindurchgeführt werden.

Besonders einfach wird das erfindungsgemäße Verfahren, wenn Luft in die Taschen eingeblasen wird, z.B. als Pressluft oder mittels eines Faltenbalgs.

Vorzugsweise ist bei einer erfindungsgemäßen Vorrichtung die Düse in die Gas-Einfüllöffnung jeder Tasche einführbar, wobei ganz besonders bevorzugt zwischen der Düse und dem Rand der Gas-Einfüllöffnung keine Abdichtung vorgesehen ist. Hierdurch wird der Kostenaufwand weiter reduziert, allerdings sind sehr hohe Fülldrücke aufgrund der Leckagen nicht möglich.

Gemäß der Erfindung weist die Gasbefüllungseinrichtung eine Aufweitungseinrichtung auf, durch die Ober- und Unterfolie im Bereich der Gas-Einfüllöffnung voneinander abgehoben werden, wobei durch den so entstandenen Kanal Luft oder ein anderes Füllgas in die Gas-Einfüllöffnung jeder Tasche eingefüllt wird. Die Aufweitungseinrichtung kann dabei die Form einer dünnen Platte aufweisen, die zwischen Ober- und Unterfolie eingreift, wobei sich die Dicke der Platte in Längsrichtung vergrößert, wodurch Ober- und Unterfolie bei einer Transportbewegung des Schlauches voneinander abgehoben werden. Im Bereich der größten Plattendicke befindet sich an der der Tascheninnenseite zugewandten Stirnseite der Platte ein Luftauslass, durch den die Taschen befüllt werden. Bei einem Weitertransport nimmt die Dicke der Platte ab, so dass Ober- und Unterfolie - einen entsprechenden Gegendruck von der Außenseite vorausgesetzt - wieder aufeinander gelangen.

Die vorstehend beschriebenen Codierungen an dem Schlauch werden bevorzugt über entsprechende Erkennungseinrichtungen detektiert und die Vorrichtung entsprechend gesteuert.

In vorteilhafter Ausgestaltung der Erfindung ist die Schweißeinrichtung weiterhin mit einer Auflagefläche versehen, auf der der Schlauch im Bereich der Gas-Einfüllöffnung der Tasche auflegbar ist und die einen dem zweiten Längsrand zugewandten hochliegenden Abschnitt und einen der Tasche zugewandten tiefliegenden Abschnitt aufweist, und mit zwei in Querrichtung beidseits des Schweißwerkzeuges angeordneten Niederhaltern, deren einer über dem hochliegenden Abschnitt und deren anderer über dem tiefliegenden Abschnitt angeordnet ist, wobei die Niederhalter in ihrer Wirkstellung an der Oberfolie anliegen und diese und die Unterfolie auf dem hochliegenden Abschnitt aufeinanderdrücken und wobei der über dem tiefliegenden Abschnitt angeordnete Niederhalter dabei einen Spalt zwischen Oberfolie und Unterfolie belässt. Die Oberfolie wird so im Schweißbereich auf sichere Weise vollständig auf die Unterfolie gedrückt, da das Gas in den Spalt ausweichen kann.

In einer bevorzugten Weiterbildung der Erfindung weist die Transporteinrichtung Magnet- oder Pneumatikaktuatoren auf, die jeweils in dem Zwischenraum zwischen den Schweißnähten eines Schweißnahtpaares an dem Schlauch angreifen. Diese Aktuatoren können Teil einer Klammer sein, die die Kunststofffolie über eine Spindel von der Rolle zieht.

In einer ebenfalls bevorzugten, alternativen Ausführungsform der Erfindung weist die Transporteinrichtung Dorne auf, die in Ausstanzungen des Schlauchs eingreifen können.

Im Rahmen der Erfindung ist vorgesehen, dass der Schlauch kontinuierlich transportiert und durch eine Gasbefüllungseinrichtung der vorstehend beschriebenen Art kontinuierlich mit Gas befüllt und anschließend von einer kontinuierlich arbeitenden Schweißeinrichtung, bevorzugt einem Heizband, zugeschweißt wird.

Die Erfindung wird nachfolgend anhand der Zeichnungen beispielshalber näher erläutert. Es zeigen:
Figur 1 eine Draufsicht auf eine erste Ausführungsform eines im Rahmen der Erfindung verwendbaren Kunststoffschlauchs;
Figur 2 eine Draufsicht auf eine zweite Ausführungsform eines im Rahmen der Erfindung verwendbaren Kunststoffschlauchs;
Figur 3 eine Draufsicht auf eine dritte Ausführungsform eines im Rahmen der Erfindung verwendbaren Kunststoffschlauchs;
Figur 4 eine Draufsicht auf eine vierte Ausführungsform eines im Rahmen der Erfindung verwendbaren Kunststoffschlauchs;
Figur 5 eine Querschnittsansicht durch einen im Rahmen der Erfindung verwendbaren Kunststoffschlauch längs Linie V-V in den Figuren 1 bis 4;
Figuren 6 bis 8 jeweils eine schematische Teilansicht einer Vorrichtung;
Figur 9 eine Draufsicht auf einen erfindungsgemäßen Kunststoffschlauch mit gasgefüllten Füllkörpern und verschweißten Gas-Einfüllöffnungen;
Figur 10 eine Querschnittsansicht längs Linie X-X in Figur 9;
Figur 11 eine Perspektivansicht der gasgefüllten Füllkörper aus Figur 9 mit zusätzlichen Codierungsmarkierungen;
Figuren 12 bis 14 Darstellungen von erfindungsgemäßen Kunststoffschläuchen ähnlich den Figuren 1 bis 5, jedoch mit zusätzlichen Codierausstanzungen;
Figur 15 eine Draufsicht auf einen Kunststoffschlauch gemäß einer weiteren Ausführungsform der Erfindung;
Figur 16 eine schematische Schnittdarstellung einer erfindungsgemäßen Vorrichtung mit kontinuierlicher Arbeitsweise, und
Figur 17 eine Schnittdarstellung der Gasbefüllungseinrichtung aus Figur 16 entlang der Schnittlinie A-B.

Die in den Figuren dargestellten Ausführungsbeispiele von im Rahmen der Erfindung verwendbaren Kunststoffschläuchen 1 sind aus einem Halbschlauch gefertigt, d.h. aus einer länglichen Kunststofffolie, die längs ihrer Längsachse gefaltet ist, so dass die eine Hälfte der Kunststofffolie als Oberfolie 2 auf der anderen Hälfte als Unterfolie 3 aufliegt. Der Faltrand 4 bildet einen ersten Längsrand, an dem die Oberfolie 2 mit der Unterfolie 3 gasdicht verbunden ist.

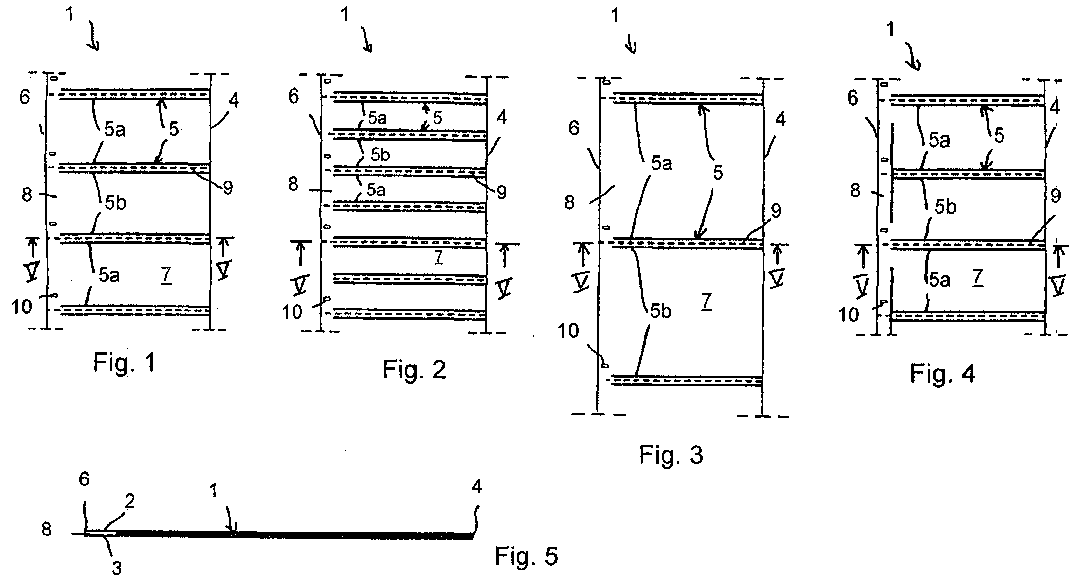

Von diesem ersten Längsrand 4 aus erstrecken sich in Querrichtung Schweißnahtpaare 5 bis zu einem vorgegebenen Abstand vom gegenüberliegenden zweiten, offenen Längsrand 6 (Figur 5). Die Schweißnahtpaare 5 sind in Schlauchlängsrichtung in einer vorgegebenen Entfernung voneinander angeordnet und verbinden die Oberfolie 2 und die Unterfolie 3 ebenfalls gasdicht miteinander. Der erste gasdichte Längsrand 4 und die einander jeweils zugewandten Schweißnähte 5a, 5b benachbarter Schweißnahtpaare 5 bilden gemeinsam sogenannte Taschen 7 aus. Auf der Seite des zweiten Längsrandes 6 sind die Taschen 7 offen, wodurch eine Gas-Einfüllöffnung 8 für jede Tasche 7 ausgebildet ist, durch jede Tasche bzw. jeder Füllkörper 7 mit Gas aufgeblasen werden kann.

Zwischen den Schweißnähten 5a, 5b jedes Schweißnahtpaares 5 ist jeweils ein Zwischenraum angeordnet, in dem eine Perforationsnaht 9 von dem ersten Längsrand 4 bis zum zweiten Längsrand 6 verläuft.

An dem zweiten Längsrand 6 sind in vorgegebenen Abständen in Schlauchlängsrichtung Markierungen 10 vorgesehen, die in den dargestellten Ausführungsbeispielen als Ausstanzungen ausgebildet sind. Wie in den Figuren 1 bis 3 dargestellt, kann der Abstand zwischen den Schweißnahtpaaren 5 von Kunststoffschlauch 1 zu Kunststoffschlauch 1 variabel sein, um unterschiedlich lange Taschen bzw. Füllkörper 7 herzustellen. Die Markierungen 10 zeigen die Lage der Schweißnahtpaare 5 an, wobei, wie beispielsweise in Figur 2 dargestellt ist, nicht für jedes Schweißnahtpaar 5 eine Markierung 10 erforderlich ist, da bei einem gleichmäßigen Abstand der Schweißnahtpaare 5 untereinander -je Kunststoffschlauch 1- die Lage von zwischen zwei Markierungen 10 liegenden Schweißnahtpaaren 5 ohne weiteres bestimmt werden kann.

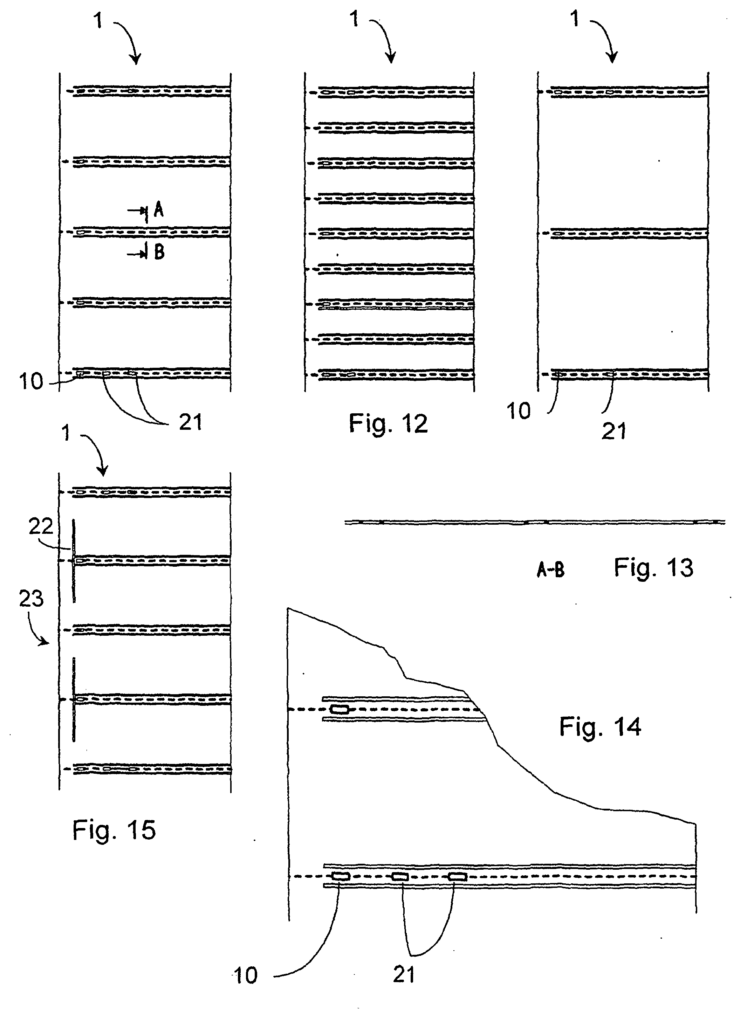

Wie in den Fig. 12 bis 14 dargestellt, können die Taschen zusätzliche Ausstanzungen 21 aufweisen, mittels derer die Eigenschaften des verwendeten Taschenmaterials codiert werden. Dadurch kann die Befüllvorrichtung bei Einlegen des Schlauchmaterials selbsttätig die korrekten Betriebsparameter wie Schweißzeiten, Befüllmengen bzw. -zeiten oder Vorschubstrecken anpassen. Die Ausstanzungen sind bevorzugt in einem vorgegebenen Abstand von dem zweiten Längsrand der Taschen angeordnet, wo sie von entsprechend angeordneten Detektionseinrichtungen der Füllvorrichtung (z.B. Gabellichtschranken) erfasst werden können. Um mit möglichst wenig Markierungen bzw. Detektoren auszukommen, können die Eigenschaften der Taschen in einem Binärcode codiert sein. Die Ausstanzungen können sich im gesamten Bereich zwischen den Schweißnahtpaaren befinden.

In Fig. 15 ist eine Ausführungsform eines im Rahmen der Erfindung verwendbaren Kunststoffschlauchs dargestellt, bei dem der zweite Längsrand bereits teilweise verschweißt ist. Bei dieser Ausgestaltung ist es möglich, zwei nebeneinanderliegende Taschen gleichzeitig zu befüllen und gleichzeitig zu verschweißen, wobei die Befüll- und Schweißwerkzeuge aufgrund der Vorverschweißungen 23 nicht breiter ausgebildet sein müssen als bei den vorstehend beschriebenen Ausführungsformen. Hierdurch kann die Füllgeschwindigkeit um bis zu 100% erhöht werden.

Bei der in Figur 4 dargestellten Ausführungsform ist auch die offene Seite der Taschen 7 im nicht aufgeblasenen Zustand, d. h. im Rahmen der Vorkonfektionierung eines Kunststoffschlauchs 1, teilweise durch eine Längsschweißnaht 11 gasdicht verschlossen. Die Längsschweißnähte 11 erstrecken sich im dargestellten Beispiel von jedem zweiten Schweißnahtpaar 5 aus zu den jeweils benachbarten Schweißnahtpaaren 5 und enden in einem vorgegebenen Abstand von diesen. Der nicht verschweißte Bereich der dem zweiten Längsrand 6 zugewandten Taschenseite bildet dann die Gas-Einfüllöffnung 8 aus. Dies hat den Vorteil, dass die Schweißeinrichtung unabhängig von dem Abstand der Schweißnahtpaare 5, d. h. der Länge der Taschen 7, jeweils nur für eine konstante Schweißnahtlänge ausgelegt sein muss, da die Länge der Gas-Einfüllöffnung 8 konstant gehalten werden kann.

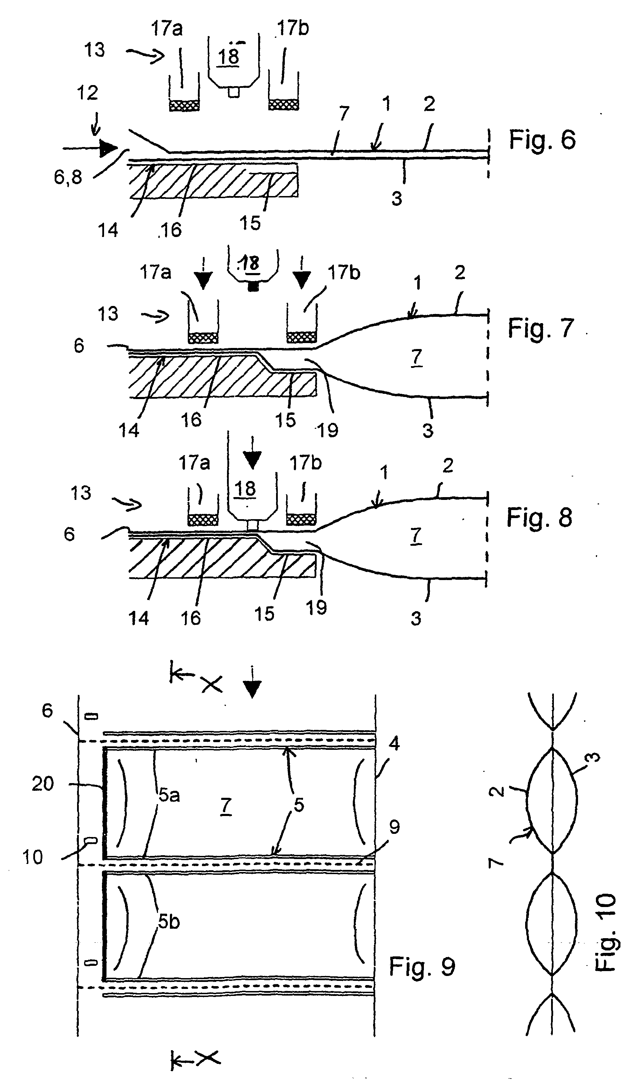

Das Verfahren und eine Ausführungsform einer Vorrichtung mit taktweisem Betrieb werden nachfolgend anhand der Figuren 6 bis 8 beschrieben. Ein vorkonfektionierter Kunststoffschlauch 1 ist als Flachschlauch auf einer Rolle aufgewickelt und wird von der Transporteinrichtung beispielsweise mittels Magnet- oder Pneumatikaktuatoren, die jeweils zwischen den Schweißnähten 5a, 5b eines Schweißnahtpaares 5 am Schlauch 1 angreifen, über eine Spindel von der Rolle gezogen und taktweise zu einer Gasbefüllungseinrichtung 12. und zu einer Schweißeinrichtung 13 transportiert. Im dargestellten Beispiel wird der zweite Längsrand 6 des Kunststoffschlauches 1, d.h. dessen die Gas-Einfüllöffnung 8 enthaltender Bereich, von der Transporteinrichtung zu einer Auflagefläche 14 transportiert, über der die Gasbefüllungseinrichtung 12 und die Schweißeinrichtung 13 angeordnet sind. Dabei zeigen die Markierungen 10 die quer verlaufenden Schweißnähte 5a, 5b an, so dass eine Synchronisation der Maschine nicht erforderlich ist. Die Gasbefüllungseinrichtung 12 bläst mittels einer Düse am offenen zweiten Längsrand 6 im vorliegenden Fall Luft seitlich zwischen die Oberfolie 2 und die Unterfolie 3 und durch die jeweilige Gas- bzw. Luft-Einfüllöffnung 8 in die zugehörige Tasche 7.

Die Auflagefläche 14 weist einen der Tasche 7 zugewandten tiefliegenden Abschnitt 15 und einen von der Tasche 7 abgewandten hochliegenden Abschnitt 16 auf. Die Unterfolie 3 einer aufgeblasenen Tasche 7 legt sich an die Kontur der Auflagefläche 14 an, wie dies in den Figuren 7 und 8 dargestellt ist.

Die Schweißeinrichtung 13 weist zwei quer zur Schlauchlängsrichtung mit Abstand zueinander angeordnete Niederhalter 17a, 17b auf. Der Niederhalter 17a ist über dem hochliegenden Abschnitt 16 der Auflagefläche 14 angeordnet, während der andere Niederhalter 17b über dem tiefliegenden Abschnitt 15 angeordnet ist. Zwischen den Niederhaltern 17a, 17b ist ein Schweißwerkzeug 18 positioniert. Die Niederhalter 17a,b können von einer Ausgangsstellung, in der sie die Oberfolie 2 nicht berühren (Figur 6), in eine Wirkstellung bewegt werden, in der beide Niederhalter 17a, 17b an der Oberfolie 2 anliegen (Figur 7). In dieser Wirkstellung werden die Oberfolie 2 und die Unterfolie 3 auf dem hochliegenden Abschnitt 16 der Auflagefläche 14 aufeinandergedrückt. Beide Niederhalter 17a, 17b sind in derselben Höhe angeordnet, wodurch der über dem tiefliegenden Abschnitt 15 der Auflagefläche 14 positionierte Niederhalter 17b zwischen der Oberfolie 2, an der er anliegt, und der Unterfolie 3, die an dem tiefliegenden Abschnitt 15 der Auflagefläche 14 anliegt, einen Spalt 19 belässt. Hierdurch wird ein glatter bzw. horizontaler Verlauf der Oberfolie 2 zwischen den Niederhaltern 17a, 17b erreicht, da die in diesem Bereich vorhandene Luft in den Freiraum 19 zwischen der Oberfolie 2 und der Unterfolie 3 über dem tiefliegenden Abschnitt 15 der Auflagefläche 14 entweichen kann.

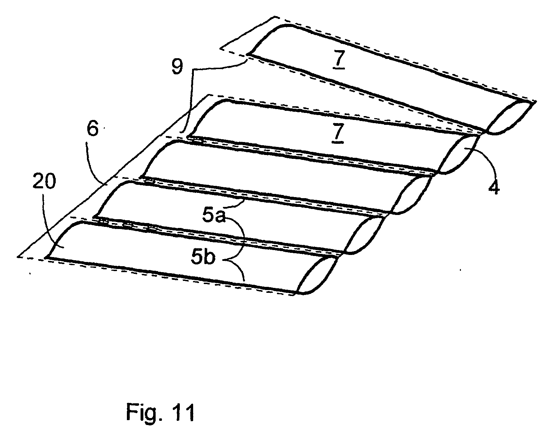

Nachdem die Oberfolie 2 durch die Niederhalter 17 auf dem hochliegenden Abschnitt 16 der Auflagefläche 14 auf die Unterfolie 3 gedrückt ist, wird das Schweißwerkzeug 18 ebenfalls nach unten, d. h. zum Kunststoffschlauch 1 hin, bewegt, um die Oberfolie 2 mit der Unterfolie 3 im Bereich der Luft-Einfüllöffnung 8 luftdicht zu verschweißen (Figur 8). Die dem zweiten Längsrand 6 des Schlauches 1 zugewandte Seite der Tasche 7 bzw. des neu fertiggestellten Füllkörpers ist jetzt - wie die anderen Seiten des Füllkörpers 7 auch - gasdicht verschlossen, wie dies in Figur 9 dargestellt ist. Die aufgeblasenen Füllkörper 7 können nun bei Bedarf an der Perforationsnaht 9 vom Schlauch 1 abgetrennt werden (Figur 11).

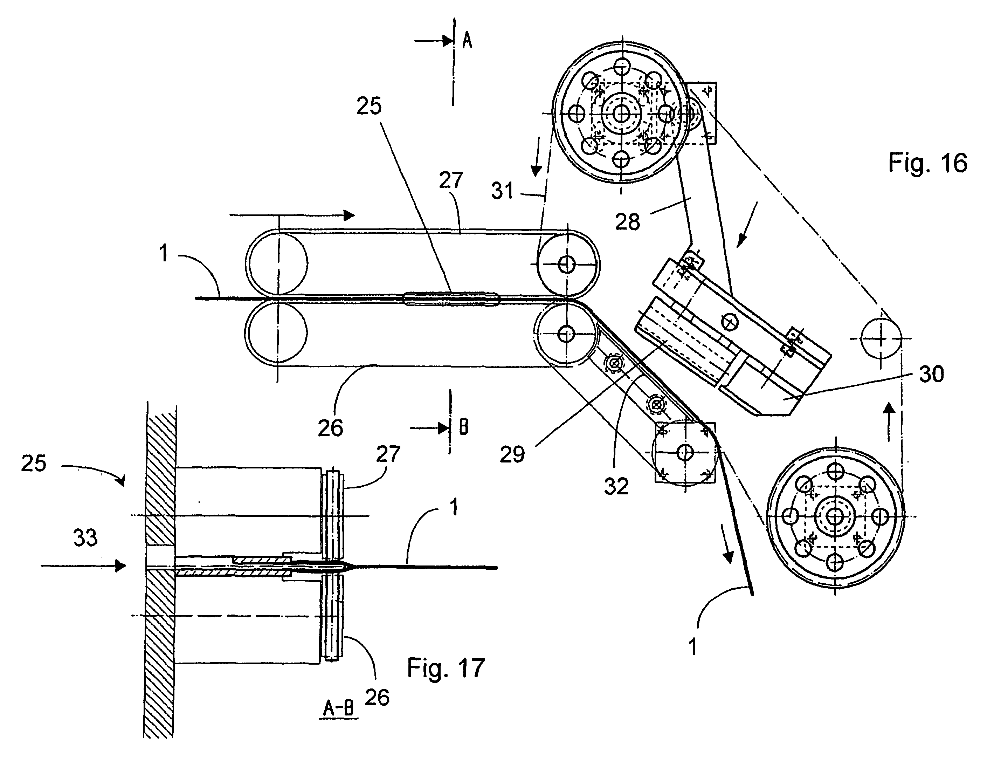

In Fig. 16 ist eine erfindungsgemäß kontinuierlich arbeitende Ausführungsform der Vorrichtung dargestellt. Der vorkonfektionierte Kunststoffschlauch 1 wird von einer Rolle oder dgl. (nicht dargestellt) zugeführt. In einem ersten Transportbereich wird die Folie von zwei Treibriemen 26, 27 an einer Gasbefüllungseinrichtung 25 vorbei geführt, die detaillierter in Fig. 17 dargestellt ist. Die Gasbefüllungseinrichtung trennt Ober- und Unterfolie des vorkonfektionierten Kunststoffschlauchs und bläst durch die so entstandene Öffnung Luft ein. Außerhalb der Gasbefüllungseinrichtung werden Ober- und Unterfolie durch die Treibriemen 26, 27 zusammengehalten, so dass die eingeblasene Luft nicht entweicht. In einem zweiten Transportbereich wird der vorkonfektionierte Kunststoffschlauch an seinem zweiten Längsrand kontinuierlich verschweißt. Dazu wird der Kunststoffschlauch auf seiner Vorderseite von einem Heizband 31 aus tefloniertem Metall geführt. Dieses Heizband wird von einer elektrisch beheizten Schweißkufe 28 in einem Schweißbereich beheizt. Die Schweißkufe 28 in Fig. 16 in einem angehobenen Zustand dargestellt. In diesem Zustand befindet sich die Schweißkufe 28 nur bei Stillstand der Anlage; bei Betrieb liegt die Schweißkufe mit einem Heizbereich 29 aus Messing gegen das Metallband 31 an, das die Wärme in einem vorgegebenen Schweißbereich auf den Kunststoffschlauch überträgt. Um ein Aufheizen des Heizbandes entlang seines gesamten Umfanges zu vermeiden und eine gleichmäßige Schweißqualität zu gewährleisten, ist in Förderrichtung hinter der Schweißkufe 29 eine Kühleinrichtung vorgesehen (z.B. mit Peltier-Elementen arbeitend), durch die dem Heizband die Wärme relativ schnell wieder entzogen wird. Auf der Rückseite wird der Kunststoffschlauch von einem Triebriemen 32 geführt. Die in Fig. 16 dargestellten Riemen 26, 27 bzw. 31, 32 sind jeweils axial in der Zeichnungsebene gegeneinander versetzt. Weiterhin sind erste und zweite Transportstrecken um einen vorgegebenen Winkel - z.B. 45° - gegeneinander geneigt. Diese Anordnung führt zu einem störungsfreieren Lauf des Kunststoffschlauchs. Durch die beim Schweißvorgang auftretende Schrumpfung würde nämlich bei komplett gerader Führung Folienmaterial aus dem ersten Transportbereich herausgezogen, was dort zu Störungen führt. Dies wird bei einer winkligen Anordnung weitgehend vermieden. Die vorstehend beschriebene kontinuierlich arbeitende Ausführungsform kann gegenüber einer taktweise arbeitenden Vorrichtung mit ähnlichen Komponenten einen tendenziell höheren Ausstoß an Füllkörpern erbringen, da bei der kontinuierlich arbeitenden Vorrichtung Transporttakte entfallen können. Im Gegensatz zur taktweise arbeitenden Vorrichtung muss bei der kontinuierlich arbeitenden Vorrichtung nach dem Schweißvorgang und vor dem Weitertransport nicht abgewartet werden, bis die Schweißnaht ausreichend abgekühlt ist.

## Patentansprüche

1. Verfahren zur Herstellung gasgefüllter Füllkörper, bei dem
a) ein vorkonfektionierter Kunststoffschlauch (1) mit zwei übereinanderliegenden Folien bereitgestellt wird, die an einem ersten ihrer Längsränder gasdicht miteinander verbunden sind, wobei die Oberfolie (2) und die Unterfolie (3) zur Ausbildung aufblasbarer Taschen (7) in Querrichtung durch mit Abstand zueinander angeordnete Paare (5) gasdichter Schweißnähte (5a, 5b) miteinander verschweißt sind, die sich von dem ersten Längsrand (4) aus bis zu einer vorgegebenen Entfernung von dem gegenüberliegenden, zweiten Längsrand (6) erstrecken, und wobei zwischen den Schweißnähten (5a, 5b) jedes Schweißnahtpaares (5) ein Zwischenraum vorhanden ist, wobei die Taschen (7) zur Ausbildung einer Gas-Einfüllöffnung (8) jeweils wenigstens in einem Teilabschnitt ihres zweiten Längsrandes (6) offen ausgebildet sind,
**gekennzeichnet durch** folgende Schritte:
b) kontinuierliches Vorbeiführen der Folie an einer Gasbefüllungseinrichtung (25), wobei in der Gasbefüllungseinrichtung nacheinander in jede Tasche (7) **durch** die Gas-Einfüllöffnung (8), die als offener Abschnitt im zweiten Längsrand der jeweiligen Tasche ausgebildet ist, Luft oder ein anderes Füllgas eingeblasen wird, wozu die Ober- und die Unterfolie (3, 4) im Bereich der Gas-Einfüllöffnung (8) voneinander abgehoben werden, so dass **durch** den so entstandenen Kanal die Luft oder ein anderes Füllgas eingefüllt werden kann,
c) Zusammenhalten der Ober- und Unterfolie außerhalb der Gasbefüllungseinrichtung, so dass die eingeblasene Luft oder ein anderes Füllgas nicht entweicht, und
d) anschließend kontinuierliches Vorbeiführen der Folie an einer Schweißeinrichtung (28), in der ein gasdichtes Verschweißen der Gas-Einfüllöffnung (8) der gasgefüllten Tasche (7) erfolgt.

2. Vorrichtung zur Durchführung des Verfahrens nach Anspruch 1, **gekennzeichnet durch**
eine Halterung für einen Schlauchvorrat, und
eine Transporteinrichtung zum Transport des Schlauches **durch** die Vorrichtung,
eine Gasbefüllungseinrichtung (25), die am zweiten Längsrand (6) des durchlaufenden Schlauches (1) angeordnet ist und eine Düse aufweist, mit der Luft oder ein anderes Füllgas in die Gas-Einfüllöffnung (8) der Tasche (7) einblasbar ist, und die eine Aufweitungseinrichtung aufweist, **durch** die Ober- und Unterfolie (3, 4) des Schlauches im Bereich der Gas-Einfüllöffnung (8) voneinander abgehoben werden, wobei **durch** den so entstandenen Kanal die Luft oder das andere Füllgas in die Gas-Einfüllöffnung jeder Tasche einfüllbar ist,
eine Einrichtung zum Zusammenhalten der Ober- und Unterfolie außerhalb der Gasbefüllungseinrichtung, so dass die eingeblasene Luft oder das andere Füllgas nicht entweicht,
eine Schweißeinrichtung (28), die ebenfalls am zweiten Längsrand (6) angeordnet ist und ein Schweißwerkzeug (29) aufweist, mit dem die Gas-Einfüllöffnung (8) einer Tasche (7) mit einer in Schlauchlängsrichtung verlaufenden Schweißnaht gasdicht verschließbar ist, wobei
die Vorrichtung derart ausgebildet ist, dass der Schlauch (1) kontinuierlich zunächst an der Gasbefüllungseinrichtung (25) und anschließend an der Schweißeinrichtung vorbeigeführt wird.

3. Vorrichtung nach Anspruch 2, **dadurch gekennzeichnet, dass** der mit Gas befüllte Schlauch (1) außerhalb der Gasbefüllungseinrichtung durch zwei Treibriemen (26, 27) zusammengehalten wird, so dass die eingeblasene Luft oder das andere Füllgas nicht entweicht.

4. Vorrichtung nach Anspruch 2 oder 3, **dadurch gekennzeichnet, dass** Luft in die Gas-Einfüllöffnungen eingeblasen wird, und dass zwischen der Düse und dem Rand der Gas-Einfüllöffnung (8) keine Abdichtung vorgesehen ist.

5. Vorrichtung nach einem der Ansprüche 2 bis 4, **dadurch gekennzeichnet, dass** die Schweißeinrichtung (28) versehen ist mit
einer Auflagefläche (14), auf der der Schlauch (1) im Bereich der Gas-Einfüllöffnung (8) einer Tasche (7) auflegbar ist und die einen dem zweiten Längsrand (6) zugewandten hochliegenden Abschnitt (16) und einen der Tasche (7) zugewandten tiefliegenden Abschnitt (15) aufweist, und mit
zwei in Querrichtung beidseits des Schweißwerkzeugs (18) angeordneten Niederhaltern (17a, 17b), deren einer (17a) über dem hochliegenden Abschnitt (16) und deren anderer (17b) über dem tiefliegenden Abschnitt (15) angeordnet ist, wobei die Niederhalter (17) in ihrer Wirkstellung an der Oberfolie (2) anliegen und diese (2) und die Unterfolie (3) auf dem hochliegenden Abschnitt (16) aufeinanderdrücken und der über dem tiefliegenden Abschnitt (15) angeordnete Niederhalter (17b) dabei einen Spalt (19) zwischen Oberfolie (2) und Unterfolie (3) beläßt.

6. Vorrichtung nach einem der Ansprüche 2 bis 5, **dadurch gekennzeichnet, dass** diese Detektoren für Markierungen (10, 21) auf der Folie aufweist, wodurch die Maschinengeschwindigkeit und/oder die Gasfüllmenge und/oder die Schweißzeit und/oder die Schweißtemperatur gesteuert werden.

7. Vorrichtung nach einem der Ansprüche 2 bis 6, **dadurch gekennzeichnet, dass** diese einen ersten Transportbereich, in dem der Schlauch kontinuierlich an einer Gasbefüllungseinrichtung (25) vorbeigeführt wird, und einen zweiten Transportbereich mit der Schweißeinrichtung aufweist, in dem der Schlauch im Bereich des zweiten Längsrandes von wenigstens einer Seite aus von einem Heizband (31) geführt wird, das in einem Schweißbereich zwecks Verschweißen des Schlauches erhitzt wird.

8. Vorrichtung nach Anspruch 7, **dadurch gekennzeichnet, dass** der erste Transportbereich und der zweite Transportbereich miteinander einen stumpfen Winkel von vorzugsweise 45° bilden.

## Claims

1. A process for producing gas-filled filling bodies in which
a) a prefabricated plastic tube (1) with two mutually superposed films which are gas-tightly connected together at a first of their longitudinal edges is provided, wherein the upper film (2) and the lower film (3) are welded together to form inflatable pockets (7) in a transverse direction by mutually spaced pairs (5) of gas-tight weld seams (5a, 5b) which extend from the first longitudinal edge (4) to a predetermined distance from the oppositely disposed second longitudinal edge (6) and wherein an intermediate space is provided between the weld seams (5a, 5b) of each pair of weld seams (5), wherein the pockets (7) are respectively open to produce a gas filling opening (8) at least in a portion of their second longitudinal edge (6),
**characterised by** the following steps:
b) continuously moving the film past a gas filling device (25), wherein in the gas filling device air or another filling gas is blown successively into each pocket (7) through the gas filling opening (8) which is in the form of an open portion in the second longitudinal edge of the respective pocket, for which purpose the upper and lower films (3, 4) are lifted away from each other in the region of the gas filling opening (8) so that the air or another filling gas can be introduced through the passage formed in that way,
c) holding together the upper and lower films outside the gas filling device so that the air or other filling gas which is blown in does not escape, and
d) subsequently continuously moving the film past a welding device (28) in which gas-tight welding of the gas filling opening (8) of the gas-filled pocket (7) is effected.

2. Apparatus for carrying out the process according to claim 1 **characterised by**
a holder for a supply of tube, and
a transport device for transporting the tube through the apparatus,
a gas filling device (25) which is arranged at the second longitudinal edge (6) of the passing tube (1) and has a nozzle with which air or another filling gas can be blown into the gas filling opening (8) of the pocket (7) and which has an expansion device by which the upper and lower films (3, 4) of the tube are lifted away from each other in the region of the gas filling opening (8), wherein the air or the other filling gas can be introduced through the passage produced in that way into the gas filling opening of each pocket,
a device for holding the upper and lower films together outside the gas filling device so that the air or the other filling gas which is blown in does not escape,
a welding device (28) which is also arranged at the second longitudinal edge (6) and has a welding tool (29) with which the gas filling opening (8) of a pocket (7) is gas-tightly closable with a Weld seam extending in the longitudinal direction of the tube, wherein
the apparatus is of such a configuration that the tube (1) is firstly moved continuously past the gas filling device (25) and then past the welding device.

3. Apparatus according to claim 2 **characterised in that** the tube (1) filled with gas is held together outside the gas filling device by two drive belts (26, 27) so that the air or the other filling gas which has been blown in does not escape.

4. Apparatus according to claim 2 or claim 3 **characterised in that** air is blown into the gas filling openings and that no sealing means is provided between the nozzle and the edge of the gas filling opening (8).

5. Apparatus according to one of claims 2 to 4 **characterised in that** the welding device (28) is provided with
a support surface (14) on which the tube (1) can be laid in the region of the gas filling opening (8) of a pocket (7) and which has a portion (16) disposed at a high level and facing towards the second longitudinal edge (6) and a portion (15) disposed at a low level and facing towards the pocket (7), and
two hold-down devices (17a, 17b) which are arranged in the transverse direction on both sides of the welding tool (18) and of which one (17a) is arranged over the portion (16) disposed at a high level and the other (17b) is arranged over the portion (15) disposed at a low level, wherein in their operative position the hold-down devices bear against the upper film (2) and press the upper film (2) and the lower film (3) against each other on the portion (16) disposed at a high level and **in that** situation the hold-down device (17b) arranged over the portion (15) disposed at the low level leaves a gap (19) between the upper film (2) and the lower film (3).

6. Apparatus according to one of claims 2 to 5 **characterised in that** it has detectors for markings (10, 21) on the film, whereby the machine speed and/or the gas filling amount and/or the welding time and/or the welding temperature are controlled.

7. Apparatus according to one of claims 2 to 6 **characterised in that** it has a first transport region in which the tube is moved continuously past a gas filling device (25) and a second transport region with the welding device, in which the tube is guided in the region of the second longitudinal edge from at least one side by a heating strip (31) which is heated in a welding region for the purposes of welding the tube.

8. Apparatus according to claim 7 **characterised in that** the first transport region and the second transport region form an obtuse angle of preferably 45° with each other.

## Revendications

1. Procédé de fabrication de corps de remplissage remplis de gaz, selon lequel
a) on fournit un tube de plastique préfabriqué (1) comportant deux films superposés qui sont mutuellement reliés en étanchéité aux gaz sur un premier de leurs bords longitudinaux, le film supérieur (2) et le film inférieur (3) étant, afin de former des poches gonflables (7), soudés l'un à l'autre en direction transversale par des paires (5), disposées à distance entre elles, de soudures étanches aux gaz (5a, 5b) qui s'étendent depuis le premier bord longitudinal (4) jusqu'à une distance prédéfinie du deuxième bord longitudinal opposé (6), et un espace intermédiaire étant présent entre les soudures (5a, 5b) de chaque paire (5) de soudures, les poches (7) étant, afin de former une ouverture (8) de remplissage de gaz, respectivement réalisées ouvertes au moins dans une région partielle de leur deuxième bord longitudinal (6),
**caractérisé par** les étapes suivantes :
b) faire passer en continu le film devant un équipement (25) de remplissage de gaz, de l'air ou un autre gaz de remplissage étant, dans l'équipement de remplissage de gaz, successivement insufflé dans chaque poche (7) par l'ouverture (8) de remplissage de gaz qui est réalisée sous forme de partie ouverte dans le deuxième bord longitudinal de la poche respective, le film supérieur (2) et le film inférieur (3) étant à cet effet écartés l'un de l'autre dans la région de l'ouverture (8) de remplissage de gaz, de sorte que l'air ou l'autre gaz de remplissage peut être rempli par le canal ainsi créé,
c) maintenir solidarisés le film supérieur et le film inférieur en dehors de l'équipement de remplissage de gaz, de façon que l'air ou l'autre gaz de remplissage insufflé ne s'échappe pas, et ensuite
d) faire passer en continu le film devant un équipement de soudage (28), dans lequel a lieu un soudage étanche aux gaz de l'ouverture (8) de remplissage de gaz des poches (7) remplies de gaz.

2. Dispositif pour la mise en oeuvre du procédé selon la revendication 1, **caractérisé par**
un support pour une réserve de tube, et
un équipement de transport pour transporter le tube à travers le dispositif,
un équipement (25) de remplissage de gaz, qui est disposé sur le deuxième bord longitudinal (6) du tube (1) passant par l'équipement et présente une buse par laquelle de l'air ou un autre gaz de remplissage peut être insufflé dans l'ouverture (8) de remplissage de gaz de la poche (7), et qui présente un équipement d'élargissement par lequel le film supérieur (2) et le film inférieur (3) sont écartés l'un de l'autre dans la région de l'ouverture (8) de remplissage de gaz, l'air ou l'autre gaz de remplissage pouvant être rempli dans l'ouverture de remplissage de gaz de chaque poche par le canal ainsi créé,
un équipement pour maintenir solidarisés le film supérieur et le film inférieur en dehors de l'équipement de remplissage de gaz, de façon que l'air ou l'autre gaz de remplissage insufflé ne s'échappe pas,
un équipement de soudage (28), qui est lui aussi disposé sur le deuxième bord longitudinal (6) et qui présente un outil de soudage (29) par lequel l'ouverture (8) de remplissage de gaz d'une poche (7) peut être fermée en étanchéité aux gaz par une soudure s'étendant dans la direction longitudinale du tube,
le dispositif étant conçu de telle sorte qu'on fait passer en continu le tube (1) d'abord devant l'équipement (25) de remplissage de gaz puis devant l'équipement de soudage.

3. Dispositif selon la revendication 2, **caractérisé en ce que** le tube (1) rempli de gaz est maintenu solidarisé en dehors de l'équipement de remplissage de gaz par deux courroies d'entraînement (26, 27), de façon que l'air ou l'autre gaz de remplissage insufflé ne s'échappe pas.

4. Dispositif selon la revendication 2 ou 3, **caractérisé en ce qu'**on insuffle de l'air dans les ouvertures de remplissage de gaz, et **en ce qu'**aucun étanchement n'est prévu entre la buse et le bord de l'ouverture (8) de remplissage de gaz.

5. Dispositif selon l'une des revendications 2 à 4, **caractérisé en ce que** l'équipement de soudage (28) est pourvu
d'une surface d'appui (14), sur laquelle peut être posé le tube (1) dans la région de l'ouverture (8) de remplissage de gaz d'une poche (7) et qui présente une partie haute (16) tournée vers le deuxième bord longitudinal (6) et une partie basse (15) tournée vers la poche (7),
et de deux serre-flans (17a, 17b) disposés en direction transversale de part et d'autre de l'outil de soudage (18), dont l'un (17a) est disposé au-dessus de la partie haute (16) et l'autre (17b) au-dessus de la partie basse (15), les serre-flans (17) s'appliquant dans leur position opérationnelle contre le film supérieur (2) et pressant l'un sur l'autre ce film (2) et le film inférieur (3) sur la partie haute (16), et le serre-flan (17b) disposé au-dessus de la partie basse (15) laissant alors un interstice (19) entre le film supérieur (2) et le film inférieur (3).

6. Dispositif selon l'une des revendications 2 à 5, **caractérisé en ce qu'**il présente des détecteurs pour des repères (10, 21) sur le film, ce qui permet de commander la vitesse de la machine et/ou la quantité de remplissage de gaz et/ou le temps de soudage et/ou la température de soudage.

7. Dispositif selon l'une des revendications 2 à 6, **caractérisé en ce qu'**il présente une première zone de transport, dans laquelle on fait passer le tube en continu devant un équipement (25) de remplissage de gaz, et une deuxième zone de transport pourvue de l'équipement de soudage, dans laquelle le tube est guidé, dans la région du deuxième bord longitudinal, sur au moins un côté par une bande chauffante (31) qui, dans une zone de soudage, est chauffée afin de souder le tube.

8. Dispositif selon la revendication 7, **caractérisé en ce que** la première zone de transport et la deuxième zone de transport forment entre elles un angle obtus, de préférence égal à 45°.
